# EUROPÄISCHE PATENTSCHRIFT

(11) **EP 1 098 804 B1**
(45) Veröffentlichungstag und Bekanntmachung des Hinweises auf die Patenterteilung: **17.04.2002**
(21) Anmeldenummer: 99947212.9
(22) Anmeldetag: 13.07.1999
(51) Int. Cl.: B62D 1/06

(54) **LENKRAD MIT DEKORVERKLEIDUNG**
STEERING WHEEL COMPRISING A DECORATIVE COVERING
VOLANT POURVU D'UN HABILLAGE DE DECORATION

(30) Priorität: 23.07.1998 DE 29813895 U
(43) Veröffentlichungstag der Anmeldung: 16.05.2001
(73) Patentinhaber: Takata-Petri AG, 63743 Aschaffenburg (DE)
(72) Erfinder: EMENETH, Jakob, D-63773 Goldbach (DE); ROSENBERGER, Benno, D-63776 Mömbris (DE)
(74) Vertreter: Baumgärtel, Gunnar, Dr.
(86) Internationale Anmeldenummer: DE9902188
(87) Internationale Veröffentlichungsnummer: WO0005123

(56) Entgegenhaltungen:
- DE-U- 29 702 241
- DE-U- 29 803 133
- DE-U- 29 813 895

## Beschreibung

Die Erfindung betrifft ein Lenkrad mit Dekorverkleidung nach dem Oberbegriff des Anspruchs 1.

Lenkräder bestehen im allgemeinen aus einem Lenkradskelett mit Lenkradkranzeinlage und Speichen, die mit einer Schaumschicht, z.B. aus Polyurethan, umhüllt sind. Zusätzlich sind manche Lenkräder mit einem Dekor, z.B. mit einem Holzdekor, versehen. So ist aus der DE 44 18 960 A1 ein Verkleidungsteil mit sichtbarer Holzoberfläche bekannt, das ein aus formstabilem Werkstoff bestehendes Tragstrukturteil aufweist, das mit einer die Sichtseite bildenden Abdeckung verbunden ist. Das Tragstrukturteil, das vorzugsweise aus zwei aneinandersetzbaren Schalenteilen besteht, ist unmittelbar an der Lenkradkranzeinlage befestigt. Diese weist einen im wesentlichen quadratischen Querschnitt auf, dem die Innenseite des Tragstrukturteils angepaßt ist. Dieser Querschnitt gewährleistet, daß sich das Tragstrukturteil bei der Montage nicht verdrehen kann und somit das Dekor bei jedem Lenkrad an der gleichen Stelle liegt.

Der Nachteil besteht darin, daß bei einer Lenkradkranzeinlage mit kreisförmigem Querschnitt das Verdrehen des Tragstrukturteils bei der Montage möglich ist, es sei denn, es wird eine Vorrichtung verwendet.

Neben den genannten quadratischen und kreisförmigen Querschnitten der Lenkradkranzeinlage sind noch andere Querschnitte bekannt. Das Tragstrukturteil muß auf seiner Innenseite diesen jeweiligen Querschnitten angepaßt sein. Daraus leitet sich der Nachteil ab, daß jeweils ein spezielles Tragstrukturteil für unterschiedliche Lenkradkanzeinlagen vorzusehen ist.

Weiterhin ist aus dem DE 298 03 133 U1, gemäß dem Oberbegriff des Anspruches 1 ein Lenkrad bekannt, bei dem ein Verkleidungsteil mittels eines clipsartigen Verbindungsteils mit dem Lenkrad verbunden ist. Diese Anordnung ist insbesondere für die Befestigung eines einseitig am Lenkrad angeordneten Verkleidungsteils geeignet.

Der Erfindung liegt die Aufgabe zugrunde, ein Tragstrukturteil, das nachfolgend als Dekorverkleidungsteil bezeichnet wird, unabhängig vom Querschnitt der Lenkradkranzeinlage verdrehsicher montieren und ausbilden zu können.

Erfindungsgemäß wird das gemäß den Merkmalen des Anspruchs 1 erreicht.

Bei einem Lenkrad mit Dekorverkleidung, wobei ein Lenkradskelett mit Lenkradkranzeinlage und Speichen zumindest abschnittsweise mit Schaum ummantelt ist und abschnittsweise mit der Dekorverkleidung, insbesondere mit einem Holzdekor, versehen ist, ist erfindungsgemäß das Lenkradskelett in den für die Dekorverkleidung vorgesehenen Bereichen mit einer Schaumummantelung versehen, die kleinere Außenabmessungen als in den übrigen Bereichen aufweist. Auf dieser Schaumummantelung ist mindestens ein formstabiles Dekorverkleidungsteil befestigt, wobei zwischen der Schaumummantelung und dem Verkleidungsteil mindestens ein Zentriermittel vorgesehen ist.

Dieser Aufbau des Lenkrades weist den Vorteil auf, daß die Außenkontur des Querschnitts der Schaumummantelung unabhängig vom Querschnitt der Lenkradkranzeinlage gleich bleiben kann, so daß die Innenkontur des Dekorverkleidungsteils ebenfalls gleich bleiben kann. Auch wenn die Schaumummantelung einen kreisförmigen Querschnitt aufweist, ist eine Verdrehung des Dekorverkleidungsteils bei der Montage wegen des vorgesehenen Zentriermittels nicht möglich.

Es ist zweckmäßig, daß die Schaumummantelung im Bereich mindestens eines Dekorverkleidungsteils als Zentriermittel mindestens mindestens ein rundes Loch aufweist, dem am Dekorverkleidungsteil (5, 6) zwei sich kreuzende Stege zugeordnet sind, deren Länge dem Durchmesser des Loches entspricht, so daß die Stege mit ihren Stirnseiten an der Lochwandung anliegen.

In einer Ausführungsform sind in mindestens einem Bereich des Lenkrades zwei den Lenkradkranz umgreifende Dekorverkleidungsteile angeordnet, die an ihren Berührungsflächen ineinandergreifen. Vorzugsweise besteht die Dekorverkleidung aus einer oberen und einer unteren Hälfte. Die obere Hälfte liegt in ihrem oberen Abschnitt an der Schaumummantelung an und dort ist das Zentriermittel vorgesehen. Die untere Hälfte verläuft im Abstand zur Schaumummantelung und ist mit dieser über mindestens einen Steg verbunden.

Die Dekorverkleidungsteile bestehen vorzugsweise aus formstabilem und temperaturbeständigem Kunststoff. Das Dekor ist zweckmäßig als Furnier- oder Folienschicht auf den Dekorverkleidungsteilen aufgeklebt. In anderen Ausführungsformen sind als Dekor eine Lackierung oder eine z. B. durch Galvanisieren, Aufdampfen oder Flammspritzen aufgebrachte Metallschicht vorgesehen.

Die Dekorverkleidung ist in einer Ausführungsform am Lenkradkranz im Ansatzbereich der Speichen vorgesehen und schließt diese zumindest abschnittsweise ein.

Die Dekorverkleidungsteile sind in einer Ausführungsform mit der Schaumummantelung zweckmäßig durch Kleben verbunden. In einer anderen Ausführungsform sind die Dekorverkleidungsteile an ihren Fügestellen miteinander verklebt oder verschweißt. Insbesondere können die Fügestellen durch elektromagnetisches Schweißen mit thermoplastischem Schweißzusatzwerkstoff miteinander verbunden werden. Das elektromagnetische Schweißen erfolgt mittels an sich bekannter Verfahrensschritte.

Während Kleber auf Kunststoffe chemisch einwirken können, entfällt diese Gefahr beim Schweißen. Es können aus diesen Gründen große Spalte, die aus Toleranzgründen notwendig sind, durch den Zusatzwerkstoff gefüllt werden.

Zur Kaschierung der Fügestellen der Dekorverbindungsteile kann ein Spalt an der Außenseite der Dekorverbindungsteile vorgesehen sein, der z.B. zumindest annähernd einen keilförmigen Querschnitt aufweist.

In anderen Ausführungsformen sind zur Kaschierung der Fügestellen in diesen jeweils eine Zierschnur eingelegt oder die Fügestellen sind durch das Dekormedium überdeckt.

Die Erfindung soll in Ausführungsbeispielen anhand von Zeichnungen erläutert werden. Es zeigen:
- Fig. 1: eine Draufsicht auf ein Lenkrad;
- Fig. 2: die Lage oberer Verkleidungshalbschalen am Lenkrad nach Fig. 1;
- Fig. 3: die Lage unterer Verkleidungshalbschalen am Lenkrad nach Fig. 1;
- Fig. 4: einen Schnitt durch den Lenkradkranz entsprechend der Linie IV - IV nach Fig. 1;
- Fig. 5: einen gegenüber der Fig. 4 im verkleinerten Maßstab dargestellten Schnitt durch diese Figur entlang der Linie V - V;
- Fig. 6a,b: die in der Fig. 4 erkennbaren Verkleidungsteile als Einzelteile;
- Fig. 7: einen der Fig. 4 entsprechenden Schnitt durch eine andere Ausführungsform des Lenkradkranzes;
- Fig. 8: einen der Fig. 4 entsprechenden Schnitt durch eine weitere Ausführungsform des Lenkradkranzes;
- Fig. 9: einen Schnitt durch die Fig. 8 entlang der Linie VIII - VIII, der gegenüber der Fig. 7 im verkleinerten Maßstab dargestellt ist.

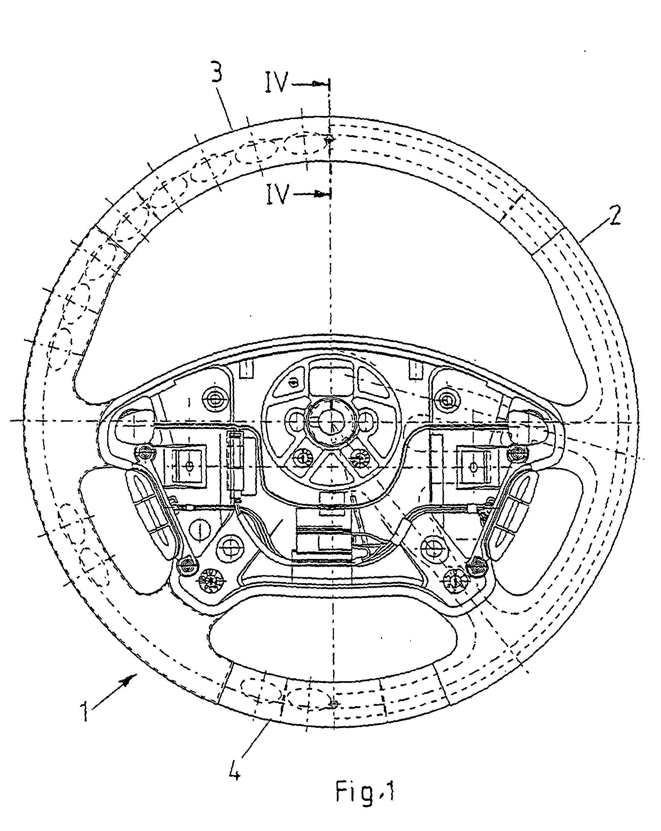

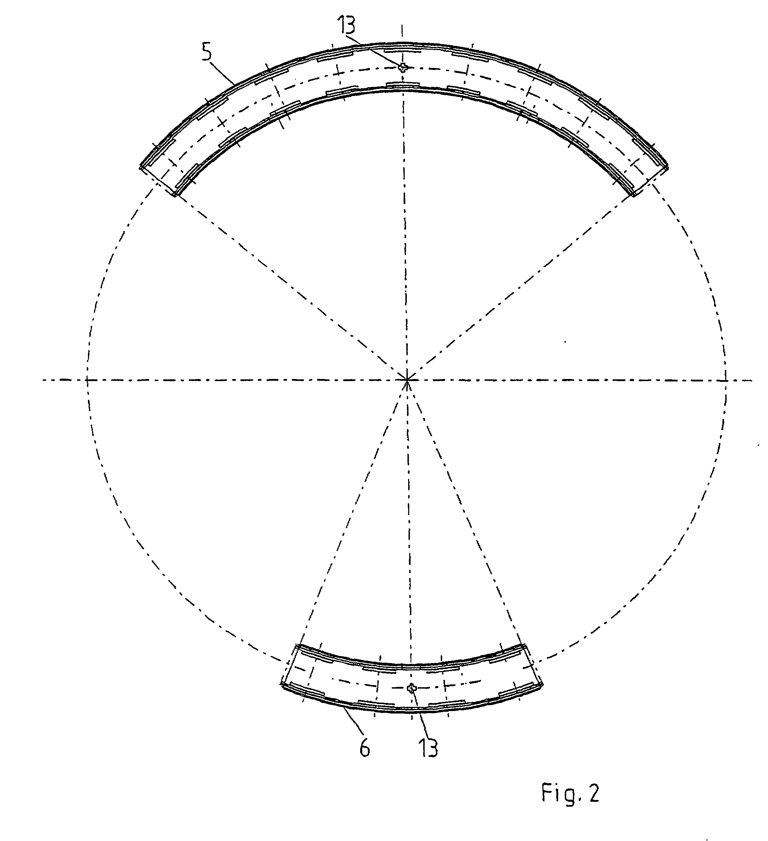

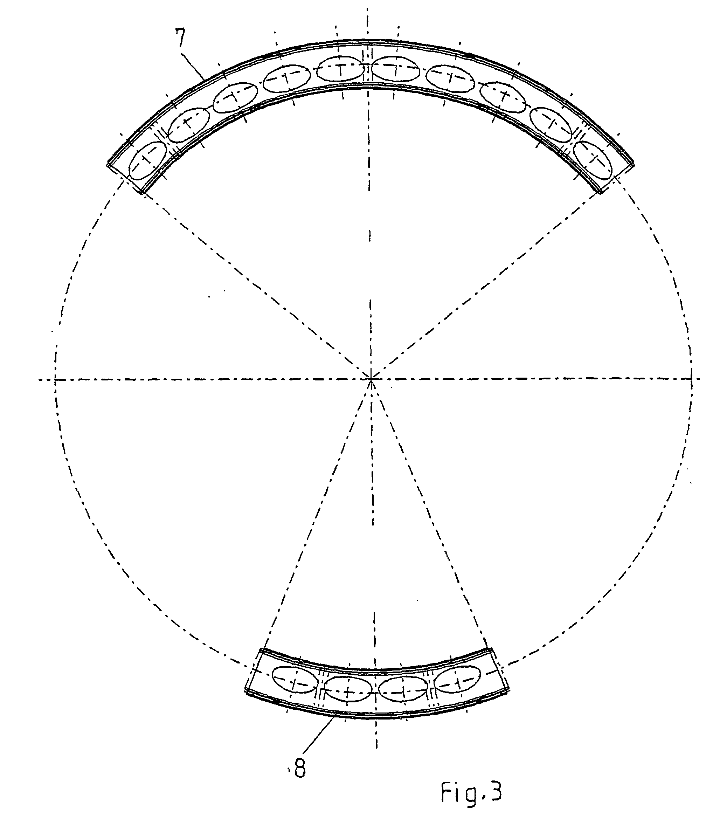

Bei dem in der Fig. 1 dargestellten Lenkrad 1 sind in speichenfreien Bereichen 3, 4 des Lenkradkranzes 2 Dekorverkleidungen vorgesehen. Diese bestehen aus Oberteilen 5 bzw. 6 (Fig. 2), denen Unterteile 7 bzw. 8 (Fig. 3) zugeordnet sind.

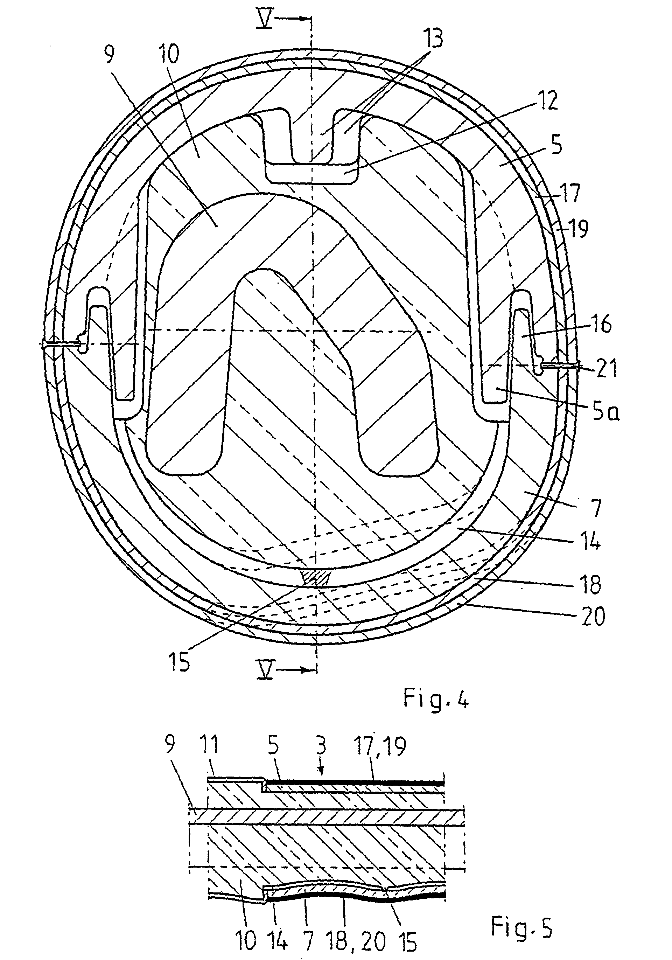

Aus der Fig. 4 ist der Querschnitt der genannten Teile des Lenkradkranzes 2 erkennbar. Dieser hat eine Lenkradkranzeinlage 9, die von einer Schaumummantelung 10, z.B aus PUR-Schaum umgeben ist. Diese weist in den speichenfreien Bereichen 3 und 4, in denen die Dekorverkleidung angebracht ist, geringere Außenabmessungen auf als in den benachbarten Bereichen, in denen der Lenkradkranz mit einer üblichen Verkleidung 11, z.B. aus Leder, ummantelt ist (Fig. 5). Dabei sind die Außenabmessungen so gewählt, daß die mit der Dekorverkleidung versehenen Bereiche des Lenkradkranzes mit den übrigen Bereichen bündig abschließen oder gegenüber diesen geringfügig zurückgesetzt sind. Auf der Oberseite ist in der Schaumummantelung ein rundes Loch 12 für den Eingriff von zwei sich kreuzenden Stegen 13 des Oberteils 5 vorgesehen. Entsprechende Stege 13 sind auch am Oberteil 6 vorgesehen.

Das Oberteil 5 ist als Halbschale ausgebildet und besteht aus formbeständigem und temperaturfestem Kunststoff. Im oberen Abschnitt entspricht die Innenkontur des Oberteils 5 der Außenkontur der Schaumummantelung 10. An der Innenseite des Oberteils 5 ist eine Führungsleiste 5a zur Erleichterung der Montage und der Zentrierung angebracht. Diese Leiste kann auch segmentartig ausgeführt sein.

Zwischen dem ebenfalls als Halbschale ausgebildeten Unterteil 7 und der Schaumummantelung 10 ist ein Zwischenraum 14 vorhanden. Eine Verbindung zwischen beiden Teilen besteht über einen Steg 15. Das Unterteil 7 weist im Bereich der Berührungsflächen mit dem Oberteil 5 einen Innenrand 16 auf, der hinter das Oberteil 5 greift. Die Außenseiten beider Teile verlaufen bündig zueinander, so daß der Lenkradkranz eine glatte Außenfläche aufweist. Das Ober- und das Unterteil sind im Bereich der Berührungsflächen miteinander verklebt.

Im vorliegenden Ausführungsbeispiel sind das Oberteil 5 und das Unterteil 7 separat mit Holzfurnier 17 bzw. 18 beklebt. Dieses ist anschließend mit Polyester-Lackschichten 19 bzw. 20 versiegelt worden. An der Nahtstelle zwischen dem Oberteil 5 und dem Unterteil 7 ist im vorliegenden Ausführungsbeispiel eine Zierschnur 21 vorgesehen.

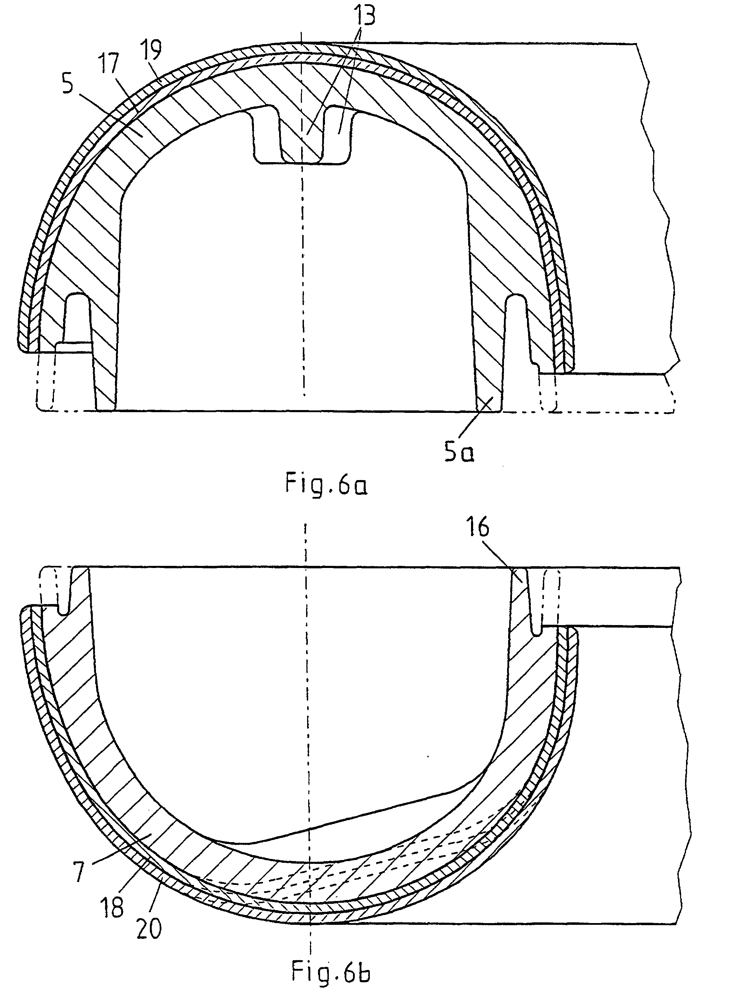

Das Ausführungsbeispiel läßt erkennen, daß wegen der Verwendung der Schaumummantelung für die Befestigung der Dekorverkleidung, diese unabhängig vom Querschnitt der Lenkradkranzeinlage gestaltet werden kann. Bei gleichem Durchmesser des Lenkrades können deshalb für unterschiedliche Querschnitte der Lenkradkranzeinlage die gleichen Dekorverkleidungen verwendet werden. Das Ober- und das Unterteil sind in den Figuren 6a und 6b nochmals einzeln dargestellt.

Der in der Fig. 4 dargestellte Aufbau des Lenkradkranzes im Bereich des Oberteils 5 und des Unterteils 7 trifft auch für den Bereich des Oberteils 6 und des Unterteils 8 zu.

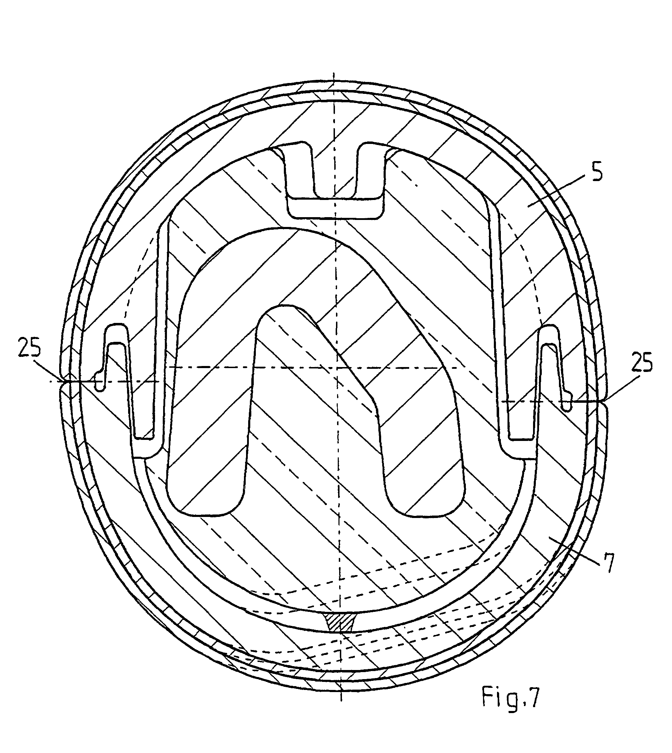

Das Ausführungsbeispiel der Fig. 7 entspricht im wesentlichen dem Ausführungsbeispiel der Fig. 4. Abweichend zu diesem ist jedoch zur Kaschierung der Fügestellen zwischen dem Oberteil 5 und dem Unterteil 7 keine Zierschnur vorgesehen, sondern zwischen beiden sind Spalte 25 vorgeshen, die einen etwa keilförmigen Querschnitt aufweisen.

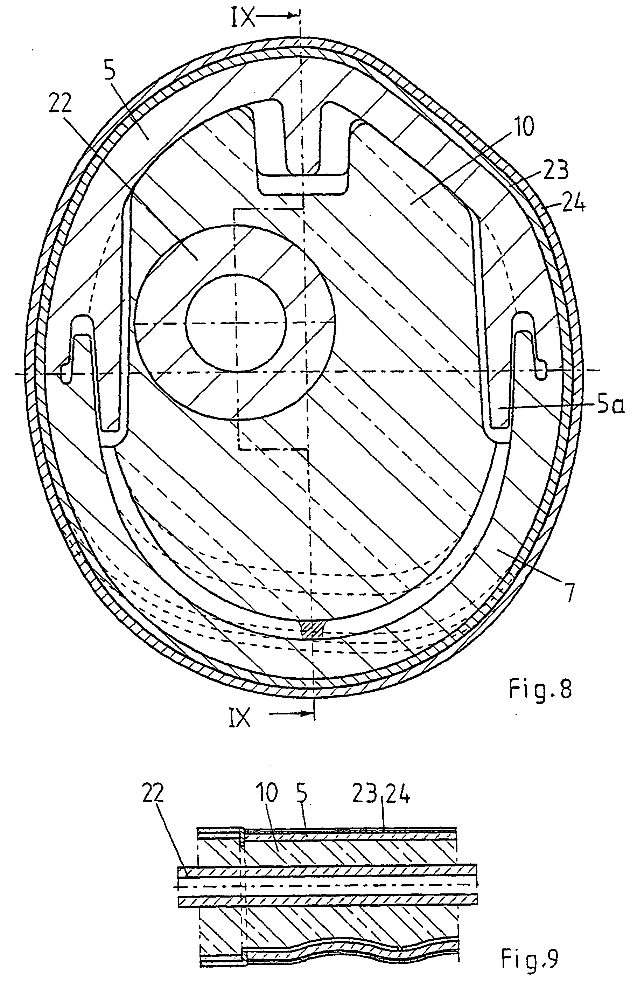

Beim Ausführungsbeispiel der Figuren 8 und 9 ist eine Lenkradkranzeinlage 22 mit kreisförmigem Querschnitt vorgesehen. Für diesen Querschnitt wird der Vorteil der erfindungsgemäßen Anordnung besonders deutlich, da bei direkter Befestigung der Dekorverkleidungsteile auf dieser Lenkradkranzeinlage mit kreisförmigem Querschnitt eine genaue Positionierung dieser Teile ohne eine Vorrichtung nicht möglich wäre. Abweichend vom ersten Ausführungsbeispiel sind keine separaten Furnier- und Lackschichten auf dem Ober- und Unterteil 5 bzw. 7 vorgesehen, sondern diese Teile werden nach Ihrer Montage auf der Schaumummantelung 10 mit einer einzigen Furnierschicht 23 beklebt, die anschließend mit einer Lackschicht 24 versiegelt wird.

## Patentansprüche

1. Lenkrad mit Dekorverkleidung (5, 6, 7, 8), wobei ein Lenkradskelett mit Lenkradkranzeinlage (9) und Speichen zumindest abschnittsweise mit Schaum ummantelt ist und abschnittsweise mit der Dekorverkleidung (5, 6, 7, 8), insbesondere mit einem Holzdekor versehen ist,
**dadurch gekennzeichnet,**
**daß** das Lenkradskelett in den für die Dekorverkleidung vorgesehenen Bereichen (3, 4) mit einer Schaumummantelung (10) versehen ist, die kleinere Außenabmessungen als in den übrigen Bereichen aufweist, daß auf dieser Schaumummantelung (10) mindestens ein formstabiles Dekorverkleidungsteil (5, 6, 7, 8) befestigt ist, wobei zwischen der Schaumummantelung (10) und dem Dekorverkleidungsteil (5, 6, 7, 8) mindestens ein Zentriermittel (5a, 13, 16) vorgesehen ist.

2. Lenkrad nach Anspruch 1, **dadurch gekennzeichnet, daß** die Schaumummantelung (10) im Bereich mindestens eines Dekorverkleidungsteils (5, 6) als Zentriermittel mindestens ein rundes Loch (12) aufweist, dem am Dekorverkleidungsteil (5, 6) zwei sich kreuzende Stege (13) zugeordnet sind, deren Länge dem Durchmesser des Loches entspricht.

3. Lenkrad nach Anspruch 1 oder 2, **dadurch gekennzeichnet, daß** in mindestens einem Bereich (3, 4) des Lenkrades (1) zwei den Lenkradkranz (2) umgreifende Dekorverkleidungsteile (5, 7) angeordnet sind, die an ihren Berührungsflächen ineinandergreifen.

4. Lenkrad nach Anspruch 3, **dadurch gekennzeichnet, daß** die Dekorverkleidung aus einer oberen (5 bzw. 6) und einer unteren Hälfte (7 bzw. 8) besteht, daß die obere Hälfte (5, 6) in ihrem oberen Abschnitt an der Schaumummantelung (10) anliegt und dort das Zentriermittel vorgesehen ist, und daß die untere Hälfte (6) im Abstand zur Schaumummantelung (10) verläuft und mit dieser über mindestens einen Steg (15) verbunden ist.

5. Lenkrad nach mindestens einem der vorhergehenden Ansprüche, **dadurch gekennzeichnet, daß** die Dekorverkleidungsteile (5, 6, 7, 8) aus formstabilem und temperaturbeständigem Kunststoff bestehen.

6. Lenkrad nach mindestens einem der vorhergehenden Ansprüche, **dadurch gekennzeichnet, daß** das Dekor als Furnier- oder Folienschicht (17, 23) auf den Dekorverkleidungsteilen (5, 6, 7, 8) aufgeklebt ist.

7. Lenkrad nach mindestens einem der Ansprüche 1 bis 5, **dadurch gekennzeichnet, daß** als Dekor eine Lackierung vorgesehen ist.

8. Lenkrad nach mindestens einem der Ansprüche 1 bis 5, **dadurch gekennzeichnet, daß** als Dekor eine Metallschicht vorgesehen ist.

9. Lenkrad nach Anspruch 8, **dadurch gekennzeichnet, daß** eine durch Galvanisieren, Aufdampfen oder Flammspritzen aufgebrachte Metallschicht vorgesehen ist.

10. Lenkrad nach mindestens einem der vorhergehenden Ansprüche, **dadurch gekennzeichnet, daß** die Dekorverkleidungsteile (5, 6, 7, 8) mit der Schaumummantelung (10) durch Kleben verbunden sind.

11. Lenkrad nach mindestens einem der Ansprüche 3 bis 10, **dadurch gekennzeichnet, daß** die Dekorverkleidungsteile an ihren Fügestellen miteinander verklebt oder verschweißt sind.

12. Lenkrad nach Anspruch 11, **dadurch gekennzeichnet, daß** die Fügestellen durch elektromagnetisches Schweißen mit thermoplastischem Schweißzusatzwerkstoff miteinander verbunden sind.

13. Lenkrad nach mindestens einem der Ansprüche 3 bis 12, **dadurch gekennzeichnet, daß** zur Kaschierung der Fügestellen der Dekorverbindungsteile ein Spalt (25) an der Außenseite der Dekorverbindungsteile vorgesehen ist.

14. Lenkrad nach Anspruch 13, **dadurch gekennzeichnet, daß** der Spalt (25) einen zumindest annähernd keilförmigen Querschnitt aufweist.

15. Lenkrad nach mindestens einem der Ansprüche 3 bis 12, **dadurch gekennzeichnet, daß** in den Fügestellen der Dekorverbindungsteile jeweils eine Zierschnur (21) eingelegt ist.

16. Lenkrad nach mindestens einem der Ansprüche 3 bis 12, **dadurch gekennzeichnet, daß** die Fügestellen der Dekorverbindungsteile durch das Dekormedium (23, 24) überdeckt sind.

17. Lenkrad nach mindestens einem der vorhergehenden Ansprüche, **dadurch gekennzeichnet, daß** die Dekorverkleidung am Lenkradkranz im Ansatzbereich der Speichen vorgesehen ist und diese zumindest abschnittsweise einschließt.

## Claims

1. Steering wheel with decorative covering(5, 6, 7, 8), a steering wheel frame with a steering wheel rim insert (9) and spokes being sheathed in foam at least in certain sections and being provided with the decorative covering (5, 6, 7, 8), in particular with a wood decoration, in certain sections, **characterized in that** the steering wheel frame is provided in the regions (3, 4) intended for the decorative covering with a foam sheathing (10) which has smaller outer dimensions than in the remaining regions, **in that** fastened on this foam sheathing (10) is at least one dimensionally stable decorative covering part (5, 6, 7, 8), at least one centring means (5a, 13, 16) being provided between the foam sheathing (10) and the decorative covering part (5, 6, 7, 8).

2. Steering wheel according to Claim 1, **characterized in that** the foam sheathing (10) has as a centring means in the region of at least one decorative covering part (5, 6) at least one round hole (12), which is assigned on the decorative covering part (5, 6) two crossing webs (13), the length of which corresponds to the diameter of the hole.

3. Steering wheel according to Claim 1 or 2, **characterized in that** two decorative covering parts (5, 7) reaching around the steering wheel rim (2) are arranged in at least one region (3, 4) of the steering wheel (1) and engage in one another at their contact surfaces.

4. Steering wheel according to Claim 3, **characterized in that** the decorative covering comprises an upper half (5 and 6, respectively) and a lower half (7 and 8, respectively), **in that** the upper half (5, 6) lies in its upper section against the foam sheathing (10) and is provided there as the centring means, and **in that** the lower half (6) extends at a distance from the foam sheathing (10) and is connected to the latter via at least one web (15).

5. Steering wheel according to at least one of the preceding claims, **characterized in that** the decorative covering parts (5, 6, 7, 8) consist of dimensionally stable and temperature-resistant plastic.

6. Steering wheel according to at least one of the preceding claims, **characterized in that** the decoration is adhesively attached as a layer of veneer or film (17, 23) on the decorative covering parts (5, 6, 7, 8).

7. Steering wheel according to at least one of Claims 1 to 5, **characterized in that** a coating is provided as decoration.

8. Steering wheel according to at least one of Claims 1 to 5, **characterized in that** a layer of metal is provided as decoration.

9. Steering wheel according to Claim 8, **characterized in that** a layer of metal applied by electroplating, vapour depositing or flame spraying is provided.

10. Steering wheel according to at least one of the preceding claims, **characterized in that** the decorative covering parts (5, 6, 7, 8) are connected to the foam sheathing (10) by adhesive bonding.

11. Steering wheel according to at least one of Claims 3 to 10, **characterized in that** the decorative covering parts are adhesively bonded or welded to one another at their joins.

12. Steering wheel according to Claim 11, **characterized in that** the joins are connected to one another by electromagnetic welding with thermoplastic welding filler.

13. Steering wheel according to at least one of Claims 3 to 12, **characterized in that**, for concealing the joins of the decorative connecting parts, a gap (25) is provided on the outer side of the decorative connecting parts.

14. Steering wheel according to Claim 13, **characterized in that** the gap (25) has an at least approximately wedge-shaped cross section.

15. Steering wheel according to at least one of Claims 3 to 12, **characterized in that** a trim cord (21) is in each case placed in the joins of the decorative connecting parts.

16. Steering wheel according to at least one of Claims 3 to 12, **characterized in that** the joins of the decorative connecting parts are covered by the decorative medium (23, 24).

17. Steering wheel according to at least one of the preceding claims, **characterized in that** the decorative covering is provided on the steering wheel rim in the region where the spokes adjoin and encloses the latter at least in certain sections.

## Revendications

1. Volant pourvu d'un habillage de décoration (5, 6, 7, 8), dans lequel une ossature de volant comportant un insert de couronne de volant (9) et des rayons est enveloppée du moins localement d'une mousse et pourvue localement de l'habillage de décoration (5, 6, 7, 8), en particulier d'une décoration en bois,
**caractérisé en ce que**
l'ossature de volant est pourvue, dans les zones (3, 4) prévues pour l'habillage de décoration, d'une enveloppe de mousse (10) qui présente des dimensions extérieures inférieures à celles dans les autres zones, **en ce qu'**au moins une partie d'habillage de décoration (5, 6, 7, 8) solide en forme est fixée sur cette enveloppe de mousse (10), et au moins un organe de centrage (Sa, 13, 16) est prévu entre l'enveloppe de mousse (10) et la partie d'habillage de décoration (5, 6, 7, 8).

2. Volant selon la revendication 1, **caractérisé en ce que** dans la zone d'au moins une partie d'habillage de décoration (5, 6), l'enveloppe de mousse (10) comprend, à titre d'organe de centrage, au moins un trou circulaire (12) auquel sont associées deux barrettes qui se croisent (13), sur la partie d'habillage de décoration (5, 6), dont la longueur correspond au diamètre du trou.

3. Volant selon l'une ou l'autre des revendications 1 et 2, **caractérisé en ce qu'**il est prévu, dans au moins une zone (3, 4) du volant (1), deux parties d'habillage de décoration (5, 7) qui entourent la couronne de volant (2) et qui s'engagent l'une dans l'autre au niveau de leurs surfaces de contact.

4. Volant selon la revendication 3, **caractérisé en ce que** l'habillage de décoration est constitué par une moitié supérieure (5 ou 6) et par une moitié inférieure (7 ou 8), **en ce que** la moitié supérieure (5, 6) s'applique par son tronçon supérieur contre l'enveloppe de mousse (10), et l'organe de centrage est prévu à cet endroit, et **en ce que** la moitié inférieure (6) s'étend à distance de l'enveloppe de mousse (10) et est reliée à celle-ci via au moins une barrette (15).

5. Volant selon l'une au moins des revendications précédentes, **caractérisé en ce que** les parties d'habillage de décoration (5, 6, 7, 8) sont constituées en matière plastique solide en forme et résistante à la température.

6. Volant selon l'une au moins des revendications précédentes, **caractérisé en ce que** la décoration est collée sous la forme d'une couche de placage ou de film (17, 23) sur les parties d'habillage de décoration (5, 6, 7, 8).

7. Volant selon l'une au moins des revendications 1 à 5, **caractérisé en ce qu'**il est prévu une peinture à titre de décoration.

8. Volant selon l'une au moins des revendications 1 à 5, **caractérisé en ce qu'**il est prévu une couche métallique à titre de décoration.

9. Volant selon la revendication 8, **caractérisé en ce qu'**il est prévu une couche métallique déposée par galvanisation, par métallisation ou par projection à la flamme.

10. Volant selon l'une au moins des revendications précédentes, **caractérisé en ce que** les parties d'habillage de décoration (5, 6, 7, 8) sont reliées par collage à l'enveloppe de mousse (10).

11. Volant selon l'une au moins des revendications 3 à 10, **caractérisé en ce que** les parties d'habillage de décoration sont collées ou soudées entre elles au niveau de leurs emplacements de jointure.

12. Volant selon la revendication 11, **caractérisé en ce que** les emplacements de jointure par reliés entre eux par soudage électromagnétique avec un matériau additionnel d'apport de soudage thermoplastique.

13. Volant selon l'une au moins des revendications 3 à 12, **caractérisé en ce qu'**il est prévu, pour masquer les emplacements de jointure des parties de liaison de décoration, un intervalle (25) sur la face extérieure des parties de liaison de décoration.

14. Volant selon la revendication 13, **caractérisé en ce que** l'intervalle (25) présente une section au moins approximativement en forme de coin.

15. Volant selon l'une au moins des revendications 3 à 12, **caractérisé en ce que** des cordons décoratifs respectifs (21) sont posés dans les emplacements de jointure des parties de liaison de décoration.

16. Volant selon l'une au moins des revendications 3 à 12, **caractérisé en ce que** les emplacements de jointure des parties de liaison de décoration sont recouverts par le moyen de décoration (23, 24).

17. Volant selon l'une au moins des revendications précédentes, **caractérisé en ce que** l'habillage de décoration est prévu sur la couronne de volant au niveau du talon des rayons et enferme ceux-ci au moins localement.
